(19) Europäisches Patentamt
European Patent Office
Office européen des brevets

(11) EP 2 157 401 A1

(12) **EUROPEAN PATENT APPLICATION**

(43) Date of publication:
24.02.2010 Bulletin 2010/08

(51) Int Cl.:
G01B 11/00 (2006.01)     G01C 3/08 (2006.01)
G01S 5/16 (2006.01)     G01S 17/08 (2006.01)

(21) Application number: 08014640.0

(22) Date of filing: 18.08.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(71) Applicant: Holding Prodim Systems B.V.
5705 BZ Helmond (NL)

(72) Inventor: Janssen, Antonlus, Johannes
5712 Ah Someren (NL)

(74) Representative: Dohmen, Johannes Maria Gerardus et al
Algemeen Octrooi- en Merkenbureau
P.O. Box 645
5600 AP Eindhoven (NL)

(54) **Apparatus and method for measuring spatial co-ordinates**

(57) In an apparatus for measuring spatial co-ordinates of an object, which apparatus comprises a portable base-unit (4) and a movable hand-held probe (50) having a front tip portion (164) for touching the object and a radiatlon-reflectlve rear portion (166), the base unit includes a time-of flight measuring system (25) for measuring the distance (z) between the probe (50) and the base-unit, and optical orientation-sensing means to determine the orientation of the probe (50) for determining the distance to the object. In a time of a-of-fllght meas- uring method, the time is measured in which a pulse of optical radiation energy, generated by a source of optical radiation (32) travels to a detector (48) after reflection of the pulse by the probe (50). The optical pulse is generated with a pulse repetition dependent on the distance (z), and the pulse repetition Is measured.

Fig. 2

**Description**

Field of the Invention

The present invention relates generally to measuring, and more specifically, to measuring of spatial co-ordinates an object by an apparatus comprises a portable base-unit and a movable hand-held probe having a tip for touching the object, the base unit being provided with measuring means for measuring the distance between the probe and the base-unit. The invention also relates to an optical tlme-of-fllght (TOF) measuring system and method suitable for use in this apparatus.

Background of the Invention

The spatial co-ordlnates of an object are understood to mean parameters defining the position of a point of an object with respect to a reference point in a three-dimensional co-ordinate system. These parameters may be distance, azimuth angle, and elevation angle of the relevant point of an object with respect to the reference point.

A portable base unit is understood to mean the cabinet of the measuring apparatus having such dimensions and weight that a user can transport It easily, for example by one arm only. This unit Is not necessarily a hand-held unit.

A hand-held probe is understood to mean a, for example, rod type-, hand piece having a front side and a backside, whereby during a measuring operation the front side is facing the object and the back is facing the base-unit.

An apparatus as defined in the opening paragraph is described In U.S. Patent 6,785,973. This apparatus includes a movable measuring probe and sensors accommodated in a portable base unit and coupled to the measuring probe for providing position data of the measuring probe. In the known apparatus the measuring probe Is coupled, by an extendable cord or wire, to a first sensor for measuring a length or change In length of the cord or wire, and to a second sensor for measuring an angle or angular displacement of the cord or wire. The second sensor is coupled to an elongate, rotatably supported, arm, in a longitudinal direction of which the cord or the wire engages the arm. The arm is spatially rotatably supported at a first end by a sphere or ball type bearing and the second sensor is configured to measure rotation of the arm in two degrees of freedom. The obtained position data can be graphically represented and/or used for driving an automatic machining apparatus for producing a product corresponding to the measured data.

The apparatus according to U.S. Patent 6,785,973 was introduced on the market with great success under the name Proliner®, a registered trademark of Prodim International, the Netherlands. Compared with more conventional 2D (two-dimensional) or 3D (three-dimensional) measuring systems, like laser systems, photo systems and robot-arm systems, this apparatus shows a unique combination of advantages. The Proliner® can measure individual points but also allows measuring 3D object contours at high speed, which is a unique capability. Due to the use of a cord, the measuring results are not affected by environmental circumstances and parameters such as dust, humidity or temperature changes. The Proliner® also shows a high accuracy: deviations are smaller than 0,3%. Moreover it is user's friendly in that its set-up time is less than two minutes. Due to its size, it can easily be carried anywhere. It can operate, or measure, very fast and processing of the measuring results does not pose specific problems. Data of executed measurement jobs can be stored in the Proliner® base unit and may be recalled at any moment. For further details about the construction, the measuring process, and the applications of the Proliner® reference is made to U.S. Patent 6,785,973.

Despite the excellent performance of the Proliner® for the envisaged applications, there is a need for re-designing it so that, for example, the measuring range is enlarged, the measurement accuracy increased and the measurement time shortened, while maintaining the above-mentioned excellent properties.

Summary of the Invention

It is an object of the invention to provide a measuring apparatus as defined in the opening paragraph, which uses optical measurements and allows distance measurement over an enlarged range.

It is a further object of the invention to provide an optical time-of-flight (TOF) measuring method which is particularly suitable for use in this apparatus.

It is another object of the invention to provide a computer program and a computer program product, comprising program code means stored on a computer readable medium, which computer program operates to carry out the method according to the invention when the computer program is loaded in a working memory of a computer and is executed by the computer.

In a first aspect the invention provides an apparatus for measuring spatial co-ordinates of an object wherein the measuring means comprise a transceiver comprising an optical radiation source and capable of emitting and receiving a pulsed measuring beam, in that a probe side facing the base unit during use is configured to reflect radiation of the measuring beam received from the transceiver back towards the transceiver, in that the transceiver is configured to perform time-of-flight measurements and in that the base unit comprises optical orientation-sensing means to determine the orientation of the probe.

The apparatus according to the invention is based on the insight that the concept of the Proliner®, i.e. accommodate the measuring and processing means as much as possible into a base unit and use a small and easy manipulatable pointing probe to point at the object to be measured, can be combined with optical measurements, provided that these measurements can be made reliable and independent of environmental parameters.

A transceiver is understood to mean a combined transmitter/ receiver. The transmitter comprises an optical radiation source and associated electronic circuitry and sends optical radiation towards the object to be measured. The optical receiver comprises a radiation-sensitive detector, for example a photo diode, and associated electronic circuitry to receive radiation reflected by the probe and to process the output signal of the photo diode. Usually, the radiation source is a laser, preferably a diode laser, but under circumstances another radiation source, such as a light emitting diode (LED) may be used.

A time-of-filght (TOF) measurement is understood to mean a distance measurement wherein the time a radiation (laser) pulse travels from a transmitter via an object, which distance from the transmitter is to be determined, to a receiver is measured. This time is proportional to the distance.

The optical orientation-sensing means Is understood to mean a radiation-sensitive multiple-cell component with associated electronic circuitry for receiving, via an imaging lens system, an image of the probe or specific parts of it and for determining the orientation, for example the azimuth and elevation angle of the probe from the shape of this image. The sensing means and imaging system may be formed by, for example, a CCD camera.

To obtain a sufficient photo diode output signal the probe side facing the base unit should show sufficient reflectivity. The required reflectivity is dependent on the intensity of the measuring beam emitted by the radiation source. In case a measuring beam having a high intensity can be used, the natural reflectance of the probe side may provide that sufficient measuring beam radiation will reach the photo diode. If a high-intensity beam cannot be used, the reflectivity of the probe side should be increased as will be described hereinafter.

It is remarked that U.S. Patent 5,898,484 discloses a hand-held distance measuring apparatus comprising a range finder, which uses a time-of-flight measuring method. However this apparatus does not comprise a base unit and a handheld probe, but is completely handheld, which implicates that it is not easy to handle and has a limited power supply. Since this apparatus does not comprise a base unit It can measure only distances; simultaneously measuring also azimuth and elevation is not possible so that the apparatus is not a 3D measuring apparatus. Moreover, since the whole apparatus is hand-held, an accurate and reliable distance reference is missing.

In a preferred embodiment of the apparatus according to the invention, the time-of-flight measuring system is an oscillating time of flight measuring system, wherein the oscillation period is determined by the momentarily distance between the base unit and the measuring probe.

This apparatus allows measuring distance differences in the order of 0.1 mm at a measuring frequency up to 10 measurements per second, so that a quasi-continuous measurement becomes possible, which is very attractive for following object contours.

In an embodiment of the apparatus according to the invention, wherein the transceiver comprises a pulsed radiation source supplying the measuring beam and an associated source drive circuit, radiation-sensitive detection means for receiving measuring beam radiation from the probe side facing the base unit and for converting this radiation into an electrical signal, electronic signal processing means for converting the electronic oscillating signal from the detection means into a drive signal for the source driver circuit and electronic measuring means for determining the time behavior of the electronic oscillating signal are provided.

In this embodiment the radiation laser source, preferably a laser and more preferably a diode laser, is switched off and on at two types of moments, respectively. At the first type of moments the electronic processing means indicate that the associated detection means has started to receive measuring beam radiation reflected by the measuring probe. At the second type of moments the electronic processing means indicates that the detection means no longer receives such radiation. The respective moments, thus the oscillation period of the TOF measuring signal, are determined by the length of the optical path between the base unit and the measuring probe. For measuring distance, the period of the oscillation may be determined.

However, to limit the clock frequency that has to be used in the electronic circuits, preferably the apparatus is arranged in that the electronic measuring means are constituted by means for measuring the oscillation frequency.

Since the electronic run time is relative large with respect to the optical run time and moreover may be not stable, for example due to drift, It may affect the measurement result. To meet this problem, the apparatus according to the invention preferably comprises optical means for generating a reference beam within the base unit and for directing this beam to the detection means to provide a reference signal that is indicative of the optical and electronic run time within the base unit, which signal is processed by the electronic processing means to correct the measured distance.

In this way the measurement result is determined purely by the distance and is not affected by the electronic circuitry and changes in this circuit an/or in the laser source and detection means.

In an attractive embodiment of the apparatus according to the Invention the reference beam generating means comprise a polarization-sensitive beam splitter, arranged in the path of the beam supplied from the radiation source and polarization switching means for switching the linear polarization state of this beam between two mutually perpendicular directions.

Dependent on the polarization state of the beam from the radiation source the beam splitter allows this beam to pass as a distance-measuring beam towards the measuring probe or to pass the source beam as a reference beam towards the detection means. The beam splitter transmits one of the measuring and reference beams and reflects the other beam.

The radiation source may be a vertical cavity surface emitting laser (VCSEL). A new design of such a laser is under development that supplies a laser beam which polarization direction can be switched between two mutual perpendicular directions. In case such a laser is used in the apparatus the polarization switching means are constituted by the laser itself and its driving means.

In case a more conventional radiation source is used, an embodiment of the apparatus according to the invention comprises polarization switching means constituted by a polarization switch arranged between the radiation source and the polarization-sensitive beam splitter.

In a further embodiment of such an apparatus, the polarization switch is a rotating body provided with a number of half-wavelength plates spaced from each other, which plates, upon rotation of the body, are successively switched into the laser beam.

When a half-wavelength ($\lambda/2$) plate is present in the beam, it rotates the linear polarization direction of the beam so that the function of the beam Is changed. Preferably, the distance between the $\lambda/2$ plates is larger than the width of these plates so that most of the time is available for the distance measurement.

In an embodiment of the apparatus according to the Invention wherein the polarization direction can be switched faster, the polarization switch is constituted by a liquid crystal based device.

The liquid crystal (LC) based device, or LC polarization switch, comprises a liquid crystal layer and an associated driver and may be constituted by a small specific embodiment of the well-known liquid crystal display (LCD), which embodiment is not provided with a polarization analyzer and a pixel structure. By applying proper voltages to the LC layer the polarization direction of a radiation beam passing the LC layer can be switched between the required directions. The absence of a pixel structure provides the advantage that diffraction effects are avoided.

Preferably, in the apparatus that is provided with a reference beam, the polarization switch is constituted by a phase rotating element that is arranged between two polarization rotating elements for rotating polarization over 90°, the three elements and the diode laser being Integrated on one substrate.

Thus, the required polarization controllable laser beam is supplied by a single small semiconductor unit.

In a convenient embodiment of the apparatus according to the Invention, the measuring probe is constituted by a cylindrical body having a front portion for touching an object and a back portion facing the base unit during use.

The bodies portion between the front portion and the back portion forms a suitable grip. The front portion may end in a tip that may have several shapes. For example, a sharp tip Is suitable for carrying out real 3D measurements and a spherical tip is suitable for measuring rough surfaces. The measuring apparatus may be furnished with several types of tips, which are easy interchangeable so that a user always can use a tip that is particularly suitable for the momentarily measuring job. By interposing a thin rod between the tip and the main body some distance is created between the two so that the tip may also be positioned at object areas, which otherwise cannot be accessed.

To ensure that sufficient measuring beam radiation is reflected by the measuring probe back into the base unit, the back portion of the probe should be sufficient reflective. The required degree of reflectivity depends on the intensity of the measuring (laser) beam. The higher the intensity is the lower the reflectivity may be. The back portion of the measuring probe may be provided with a reflective layer or a reflective element may be fixed to it.

Preferably, in an embodiment of the apparatus according to the invention the back portion of the measuring probe is provided with retroreflective means. Such means reflect a radiation beam incident on it along the same path that the Incident beam has travelled and thus provides maximum reflection in the required direction so that the intensity of the laser beam can be limited.

The retroreflective means may be constituted by a corner cube, which is a well-known retroreflective element. Alternatively, a flat assembly of a number of small corner cubes may be used.

In addition to the distance between the back portion of the measuring probe and the base unit also the orientation of the probe should be measured to obtain the real position of the probe tip, i.e. the object point to be measured. For measuring this orientation, i.e. the azimuth and elevation angle of the probe, the base unit includes optical orientation-sensing means, preferably a camera such as CCD- or a CMOS camera. The objective lens system of the camera forms an image of the measuring probe on the camera (CCD or CMOS) sensor. From the position and shape of this image the orientation of the measuring probe can be determined by means of the electronic processing circuitry of the camera and suitable software for reading out the sensor cells.

In order to enhance the quality of the probe Image formed on the camera sensor so that reliability and accuracy of the probe orientation measurement is Increased, the probe may be provided with radiation means. These means may be a light emitting diode (LED) which may be positioned for example in a (retro-) reflector that is arranged in or on the measuring probe.

It is remarked that U.S. Patent 5,305,091 discloses a measuring probe provided with an LED, which is arranged in a reflector and is imaged on a position-sensitive detector included In a transceiver. The measuring system of U.S. Patent 5,305,091 which is intended for measuring larger objects and comprises a movable probe with two reflectors, is accommodated in a measuring room. It comprises a number of transceivers, which are arranged in the walls of the room. The reflectors are omnidirectionally reflective.

The apparatus of the invention is preferably **characterized in that** the measuring probe is provided with an external radiation emitting configuration which image formed on the sensor of the orientation-sensing means changes its pattern upon change of orientation of the measuring probe.

The pattern of the image formed on the sensor is understood to include both the position and the shape of this image on the sensor. External is understood to mean provided at the outside surface of the probe. The orientation-detection-enabling configuration may be any radiation emitting configuration which image pattern on the sensor changes upon movement of the measuring probe in any direction other than the distance measuring direction. For example, the configuration may be formed by two or four arm-like elements each comprising a radiation source, for example at least one LED and being fixed to the probe. Alternatively, the configuration may be constituted by a number of individual LED's arranged around the measuring probe and the sensing means may be constituted by a position sensitive detector, whereby the LED's are successively switched on and off so that at any moment only one of the LED's is switched and the others are switched off.

Preferably the apparatus according to the invention provided with the orientation-detection-enabling configuration is arranged in that the configuration is constituted by at least one radiation-emitting ring shaped element.

In this embodiment at least one bright image ring is formed on the sensor, which image generally is not ring-shaped, but elliptically shaped in dependency of the orientation of the measuring probe. Compared with images of other radiating configurations, the position and shape of the image of a radiating ring can be determined with higher precision so that a radiating ring-shaped element is very suitable for determining the orientation of the measuring probe.

The orientation-sensing means may be formed by a position-sensitive detector, which may cooperate with a ring of successively radiating LED's on the probe surface. Such a detector is generally known in the optical measuring technique for determining displacement of an Image.

However, in a preferred embodiment of the apparatus according to the invention, the orientation-sensing means are constituted by at least one digital camera. This provides a less complicated solution for determining the orientation of the measuring probe.

The apparatus may be further arranged in that the orientation-sensing means are constituted by two digital cameras, which have a large viewing angle and a small viewing angle, respectively.

This embodiment allows high-accuracy measurement of the orientation and position of the measuring probe at both larger distances and smaller distances. Moreover, it is possible to use firstly the camera with the larger viewing angle for fast and coarse localizing the measuring probe and then perform fine localization with higher accuracy by means of the camera having the smaller viewing angle.

Alternatively, the orientation-sensing means may be constituted by one digital camera having a zoom function. For easy operation of the apparatus two zoom set points may be used for large and short distance, respectively, which points may be set by calibration.

In practice it may be very helpful for the user if the apparatus allows keeping the measuring beam directed towards the measuring probe once the measuring probe has been localized. A preferred embodiment of the device showing this feature is arranged in that the base unit Includes actuator means for controlling the direction of the measuring beam such that this beam remains directed towards the measuring probe, which actuator means are controlled by an output signal of the orientation-sensing means.

The measuring results obtained from the probe-orientation-sensing means, or camera(s) and the associated signal processing means may thus be used for two purposes. At the one hand these results, i.e. the measured azimuth and elevation data are used together with the azimuth and elevation data of the base unit to calculate the azimuth and elevation data of the tip at the front portion of the probe. With the result of this calculation and the measured distance between the base unit and the back side of the probe the proper distance between the base unit and the tip, thus the object point to be measured, is calculated. These calculations also use another parameter, namely the calibrated distance between the tip and the radiation-emitting configuration on the probe. At the other hand the signals from the orientation sensing means are processed to a drive signal for actuator means, for example motors such as an electric motor or a piëzo-electric device, within the base unit. By means of these motors the orientation of the TOF system or part of it can be changed to control the direction of the measuring beam such that this beam is always fully incident on the reflector at the back side of the measuring probe and optimally reflected. This control mechanism that may be called probe tracking allows distance measuring with high precision.

It is noted that U.S. Patent 5,764,360 discloses an optic-electrical apparatus for measuring absolute distances, which includes a corner reflector and uses reflector tracking. However, the reflector does not form part of a handheld probe. Reflector tracking is performed by means of tracking radiation emitted by the apparatus and not by tracking radiation emitted by a probe. Moreover, distance measurement is not performed by a TOF system, but by an Interferometer system that is substantially more expensive and larger. Due to the size of the interferometer system It is not easy to realize the movements of the system required for tracking. The TOF system is not only cheaper, but also more compact so that the whole system can be easily moved. Another disadvantage of the interferometer system is that once the measuring beam is interrupted the system should be re-started, i.e. the retroreflector should be re-captured. As a consequence the known apparatus is also not suitable for following the contour of an object.

Also U.S. Patent Application 2006/006836 describes an optic electrical absolute-distance measuring apparatus that co-operates with a retroreflector and includes a position-sensitive detector and gimbals means for tracking the reflector. However, this document does not disclose a base unit and a measuring probe with a radiation emitting configuration and the distance is not measured by means of an oscillating TOF system in accordance with the invention, as disclosed herein before.

Since the TOF system according to the invention shows excellent performance it Is also very suitable for other and new applications. Thus, this novel and inventive TOF system per se forms part of the invention. An embodiment of the invention, wherein the TOF system comprises a transceiver, which includes a pulsed radiation source supplying a measuring beam and an associated source drive circuit, and radiation-sensitive detection means for receiving measuring beam radiation reflected by the object and for converting this radiation into an electrical signal, is characterized by electronic signal processing means for converting the electronic signal from the detection means Into a drive signal for the source drive circuit to switch the source on and off in dependency of the current distance and electronic measuring means for determining the frequency of the radiation source pulses.

It is noted that the English abstract of the Taiwanese Patent Application 226430B discloses a distance measuring method which uses a frequency counter to measure the oscillation cycle. A radiation pulse reflected by an object to triggers the next emitted pulse. However, no reflected pulse Is used to switch off a running pulse. Moreover, it is the distance between a target point and a reference point that is measured and not the distance between a target point and the time-of- flight base unit.

The time-of flight measuring system according to the invention preferably comprises optical means for generating a reference beam within the base unit and is arranged for directing this beam to the detection means to provide a reference signal that is indicative of the optical and electronic run time within the base unit, which signal is processed by the electronic processing measuring means to correct the measured distance.

Preferably this time-of-flight measuring system is arranged in that the reference beam generating means comprises a polarizatlon-sensltlve beam splitter, arranged in the path of the beam supplied by the radiation source and polarization switching means for switching the linear polarization state of this beam between two mutually perpendicular directions.

The polarization switching means may be incorporated in the diode laser and its driver in case the laser is VCSEL. In case a conventional radiation source is used a polarization switch is arranged between the radiation source and the polarization-sensitive beam splitter.

An embodiment of the TOF according to the Invention wherein the electronic measuring means includes a differential input stage and a frequency counter, is preferably arranged in that between the input stage and the frequency counter one of a phase locked loop and a frequency locked loop is arranged.

Such a loop may perform a double function: counting frequencies and filtering. It allows minimizing the affect of higher noise frequencies.

In the TOF system including a loop, in a further embodiment of the invention, part of the loop is split up in a measuring branch and a reference branch each comprising a loop filter and a voltage controlled oscillator and in that the loop includes a switch for switching between distance measurement and reference measurement.

This measure allows substantial reduction of the delay when switching between distance measurement and reference measurement.

In a second aspect, the invention provides a time of a-of-flight measuring method, wherein the time is measured in which a pulse of optical radiation energy, generated by a source of optical radiation, travels from the radiation source to a detector after reflection of the pulse by an object, for measuring a distance between this object and the radiation source, wherein the optical pulse is generated with a pulse repetition dependent on the distance to be measured and wherein the pulse repetition is measured. The pulse repetition may be measured either as a pulse repetition frequency, also called pulse frequency, or a pulse repetition time.

In a preferred embodiment of the method according to the invention, the radiation source is switched off at an incline of radiation energy received at the detector and the radiation source is switched on at a decline of radiation energy received at the detector, wherein the pulse repetition is measured from switching on and off the radiation source. Preferably the measurement is corrected for the processing time of the radiation source and corresponding control electronics, by using a reference measurement as explained above.

In a third aspect of the invention a computer program product is provided, comprising program code means stored on a computer readable medium, which computer program operates to carry out the method according to the invention when the computer program is loaded in a working memory of a computer and is executed by the computer.

These and other aspects of the invention will be apparent from and elucidated by way of non-limitatlve example with reference to the embodiments described hereinafter.

Brief Description of the Drawings

In the drawings:

Fig. 1 shows, in a schematic and illustrative manner, a prior art apparatus for measuring spatial co-ordinates;

Fig. 2 shows, in a schematic and illustrative manner, an embodiment of the optical subsystem of the TOF system according to the invention;

Fig. 3 shows a time diagram elucidating the principle of the oscillating TOF system a shown in Fig. 2;

Fig. 4 shows in a graph the variation of the oscillation period, expressed in nanoseconds along the ordinate, as a function of the measured distance, expressed in meters along the abscissa, for the TOF system according to an embodiment of the invention;

Fig. 5 shows in a graph the variation of the oscillation frequency, expressed in Megahertz along the ordinate, as a function of the measured distance, expressed in meters along the abscissa, for the TOF system according to an embodiment of the invention;

Fig. 6 shows a block diagram of, an embodiment of an electronic subsystem of the TOF system according to the invention;

Fig. 7 shows, in a schematic and illustrative manner, an embodiment of an optical reference measuring subsystem of the TOF system according to the invention;

Fig. 8 shows, in a schematic and illustrative manner, a first embodiment of a mechanical polarization switch for use in the oscillating TOF system according to the invention;

Fig. 9 shows, in a schematic and illustrative manner, a second embodiment of such a polarization switch;

Fig. 10 shows a block diagram of an integrated diode laser and electro optical switch of an embodiment for use In the oscillating TOF system according to the invention;

Fig. 11 shows a block diagram of an embodiment of the oscillating TOF system according to the invention, Inclusive the electronic components for frequency measurement;

Fig. 12 shows, in a block diagram, a first embodiment of a phase locked loop for use in the measuring means of the TOF system according to the invention;

Fig. 13 shows a block diagram of a second embodiment of a phase locked loop for use in the measuring means of the TOF system according to the invention;

Fig. 14 shows a block diagram of an embodiment of a phase locked loop having separate branches for distance and reference measurement for use in the measuring means of the TOF system according to the invention;

Fig. 15 shows, in a schematic and illustrative manner, an embodiment of a measuring probe according to the invention;

Fig. 16 shows, in a schematic and illustrative manner, a perspective view of the base unit of the measuring apparatus according to an embodiment the invention;

Figs. 17a-17c show, in a schematic and illustrative manner, several elevation positions of the TOF system according to an embodiment of the invention, and

Figs. 18a -18c show, in a schematic and illustrative manner, several azimuth positions of the TOF system according to an embodiment of the invention.

In the Figures for the same or like elements the same reference numerals are used.

Detailed Description of Preferred Embodiments of the invention

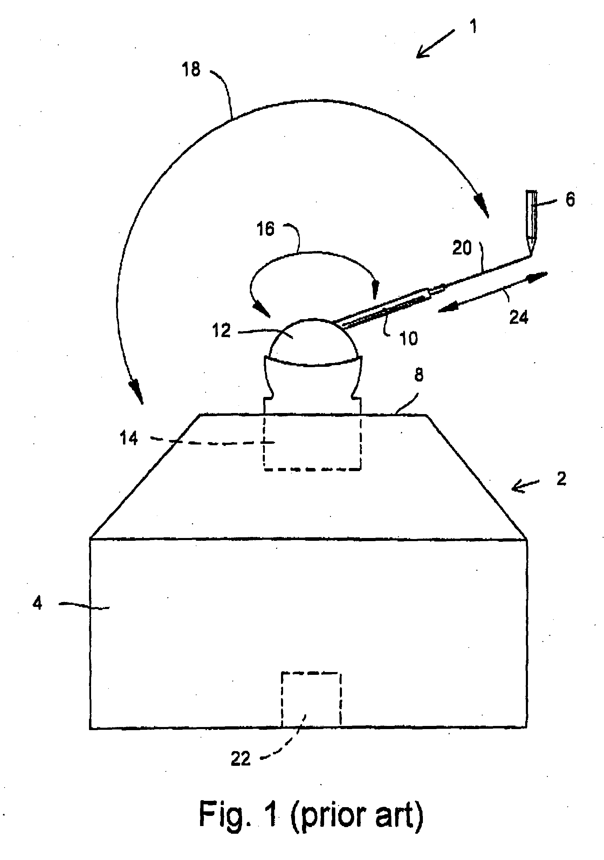

To illustrate the background of the invention and to clarify the differences between the apparatus of the invention and the apparatus of U.S. Patent 6,785,973, which is the most relevant prior art device, a schematic side view of the latter apparatus is shown in Fig. 1, The apparatus 1 is composed of a base unit 2, which is accommodated In housing 4 that Is, for example trapezoidal shaped, and a measuring probe 6. On the upper surface 8 of the housing 4 a swingably supported arm 10 Is disposed. The arm 10 is provided with a ball joint 12 at one end. Coupled to the ball joint 12 is a sensor, schematically represented by box 14, which is capable of measuring the rotation of the arm 10 in two degrees of freedom. As indicated by means of curved arrow 16, the sensor may measure movement of the arm in an imaginary plane parallel to the upper surface 8 of housing 4, which plane may be called azimuth plane. In addition thereto and as indicated by means of curved arrow 18, the sensor may measure movement of the arm 10 in an imaginary plane perpendicular to the surface 8, which plane may be called elevation plane.

The measuring probe 6 is connected to the base unit 2 by means of an cord or wire 20 which is extendable as schematically indicated by arrow 24. The base unit is provided with a tensioning and roll-up mechanism for the wire, which mechanism is schematically represented by block 22. This mechanism comprises a biassed pre-set reel on which the cord or wire is wound. During measurement of, for example the contour of an object, the measuring probe 6 is successively pointed at different locations on this object. Movements of the measuring probe results In changes in length of the free wire 20 between the probe and the free end of the arm 10. The length or change in length of the free wire is measured by means of a sensor (not shown) in the base unit 2, which sensor measures the angular displacement of the reel.

The measuring apparatus has the advantage that it can be designed as a relatively small and portable unit for measuring small objects placed on a measuring table, for example, but also for measuring larger objects that are present in a space. For further details about the measuring principle and several embodiments of the apparatus reference is made to U.S. Patent 6,785,973. The measuring results obtained by means of this apparatus are not affected by environmental circumstances and parameters, such as dust, humidity, or temperature changes. The apparatus shows a high accuracy, it is user's friendly, and its set-up time is very short and processing of the measuring results is simple.

The present invention substantially improves this apparatus, for example allows enlarging of the measuring range, Increasing measurement accuracy and shortening measuring time, while maintaining the excellent properties. According to the invention, the distance between the measuring probe and the base unit, the azimuth and the elevation of the probe are all determined by means of optlc-electronic means instead of mechanic-electronic means. The wire or cord and the associated means for measuring the free length of the cord are replaced by an optical measuring beam and an optical transceiver in the base unit to emit a measuring beam and receive measuring beam radiation reflected by the measuring probe. This probe is provided with reflector means.

Measuring the distance between the measuring probe and the base unit, is performed by means of a special type of time-of-flight (TOF) measuring system, which uses an oscillator principle. In conventional TOF measuring systems, which are used for other applications, the time interval between the launch of an optical pulse and the arrival of the pulse after having been reflected by an object is measured. When such a time measurement was used in the present apparatus, time intervals in the order of picoseconds would have to be measured. Since, moreover the measurement signal is embedded in a large DC signal, such a measurement would be very difficult and time consuming.

According to the invention, an oscillating TOF measuring system is used, which is designed such that on and off switching of the measuring beam is initiated by radiation and non-radiation, respectively returning to the optical transceiver. The momentarily pulse frequency of this system is determined by the time interval that the light of the measuring beam needs to travel from the base unit to the measuring probe and back to the base unit. By performing a series of frequency measurements and averaging the measuring results very accurate and fast distance measurement can be performed.

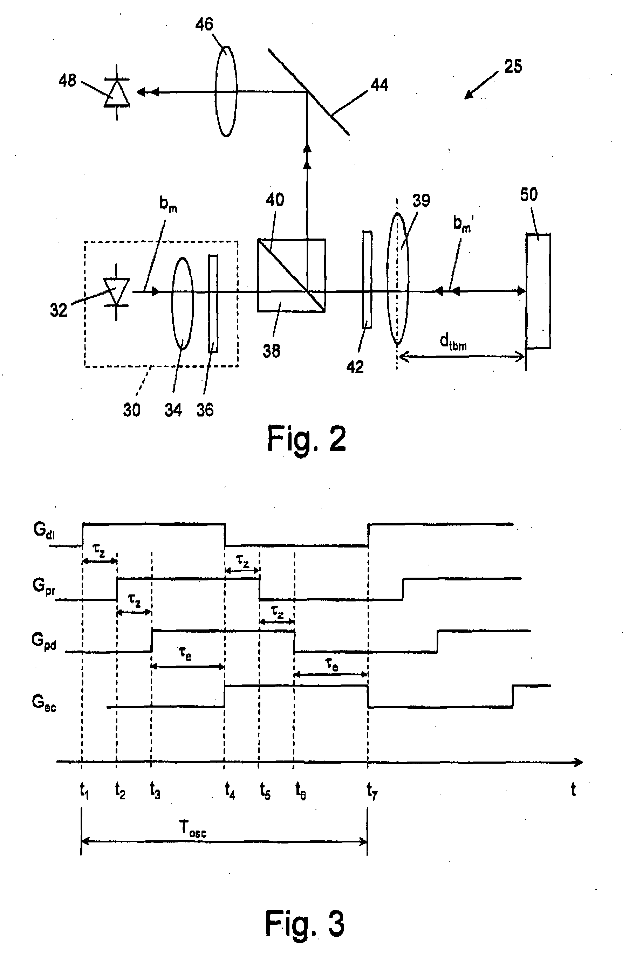

Fig. 2 shows a diagram of the optical system of an embodiment of the oscillating TOF device 25 according to the invention. This system comprises a radiation source unit 30 comprising a radiation source 32, such as a laser, for supplying a linearly polarized measuring beam $b_m$, schematically indicated by a single arrow. This beam is, for example a P-polarized beam, and is incident on a polarization-sensitive beam splitter 38 having a beam-splitting interface 40. This beam splitter is preferably a polarizing beam splitting (PBS) cube, which interface 40 shows a very large transmission coefficient for P-polarized radiation and a very high refection coefficient for S-polarized radiation. If circumstances require so, beam splitting, or separation, may be improved by using additional polarization filters in the radiation path of the measuring beam or in that of the reference beam, which is discussed later on. The beam splitter 38 passes the P-polarlzed beam $b_m$ toward a reflecting measuring probe 50. A beam of radiation $b_m'$, schematically Indicated by a double arrow, that is reflected by the probe again reaches the beam splitter 38 In the base unit so that it can be reflected by interface 40 towards a radiation-sensitive detector 48, for example a photodiode. In order to obtain maximum separation of the reflected beam $b_m'$ from the beam $b_m$ and to prevent reflected measuring radiation from entering the diode laser, a $\lambda/4$ (quarter-wave) plate 42 is arranged In the radiation path behind the beam splitter 38, viewed from the radiation source 32. The plate 42 is oriented such that it converts the linearly (P-) polarized beam $b_m$ Into a circularly polarized beam. Provided that reflection at the measuring probe 50 does not change the polarization state of the measuring beam the phase of the reflected beam $b_m'$ re-entering the TOF system is shifted another 90° upon the second passage of the $\lambda/4$ plate 42. Thus the phase of the beam $b_m'$ leaving the plate 42 and re-entering beam splitter 38 has been shifted 180° in total with respect to that of the beam $b_m$ from the radiation source 32. This means that the beam $b_m'$ incident on the beam splitter 38 is again linearly polarized whereby its polarization direction is rotated over 90° with respect to the polarization direction of the original beam $b_m$. Consequently this beam $b_m'$ is reflected by the interface 40 of the beam splitter 38.

A folding reflector, for example a mirror 44, may be arranged in the path of the reflected measuring beam $b_m'$ leaving the beam splitter 38 so that the detector (photodiode) 48 can be arranged close to the radiation source 32, preferably a diode laser. Between the mirror 44 and the detector 48 a converging lens 46 may be arranged to focus the

beam $b_m$' on the detector 48. In addition to the radiation source 32, the radiation source unit 30 may comprise a polarization filter 36, which passes, in this embodiment, only P-polarized light. If the P/S polarization ratio of the diode laser is sufficient large, the filter 36 may be omitted. The unit 30 may also include a lens 34 for shaping the radiation beam emitted by the radiation source to a substantially collimated beam.

A lens 39 having a large diameter may be arranged behind the $\lambda/2$ plate 42 to capture maximum of the radiation reflected by the measuring probe 50. This lens may form part of a beam expanding lens system that transforms the beam emitted by the radiation source into a beam having a relative large diameter. In the reverse direction this lens system functions as a beam compression system that decreases the cross-section of the reflected $b_m$'. Thereby this beam becomes very suitable to cooperate with the photodiode 48 that preferably has a small photosensitive area in order to be fast. To increase the signal-to-noise ratio (SNR) of the output signal of the detector 48 this detector may be embedded in a radiation concentrating mirror system such as a compound parabolic concentrator (CPC) having two mirror surfaces. Also other known optical means for confining the beam may be used (not shown).

The distance to be measured Is the distance between the probe 50 and the base-unit of the measuring system according to the invention. When using a lens 39, the distance to be measured is the distance between the probe and the lens 39. as indicated by $d_{tbm}$ in Fig. 2.

In some cases, for example if only a small measuring range is required and the measuring beam may be less collimated, the radiation source 32 may be a light emitting diode (LED), which can be modulated at the required high frequency. Since the LED emits non-polarized radiation, a polarization filter should be added to obtain radiation with the required polarization. Since a vertical cavity surface emitting laser (VCSEL), which Is a type of diode laser, can be switched at a very high rate, it is preferred to use such a laser as the radiation source provided that the polarization state of such a laser can be stabilized.

Fig. 3 shows a time diagram that elucidates the oscillator principle of the TOF measuring system of Fig. 2. The oscillator is an a-stable multivibrator type, which is controlled as follows. First the radiation source 32, such as a diode laser in Fig. 2, is switched on and when the emitted radiation thereof has travelled a radiation path from the diode laser via the measuring probe 50 to the detector 48 and the output signal of the detector 48 has been processed to a drive signal for the diode laser, the laser is switched off. After the laser-off message has travelled the same path and processed in the same way as the radiation emitted from the previous laser-on signal, the diode laser is switched on again.

In Fig. 3, graphs $G_{dl}$, $G_{pr}$, $G_{pd}$ and $G_{ec}$ represent the situations for a diode laser (dl) acting as radiation source, the probe (pr), a photodiode (pd) acting as detector, and the electronic processing circuit (ec) at different points in time, t, respectively. At $t_1$ the diode laser is switched on and a measuring beam is sent towards the probe where it arrives and Is reflected after a time interval $\tau_z$ (the optical run time_1 or the time the radiation needs to travel the distance z between the diode laser and the measuring probe), thus at moment $t_2$. After another time interval $\tau_z$, thus at moment $t_3$, the radiation arrives at the photodiode. For the sake of simplicity it is assumed that the optical path length from the laser to the measuring probe is the same as the optical path length from the probe to the photo diode. In reality, and as shown in Figure 2, these path lengths can be different, but for this explanation this is not important. An (electronics) time delay $\tau_o$, i.e. the time Interval needed for the output signal of the photodiode to pass the electronic circuit and be processed, after moment $t_3$, thus at moment $t_4$, a switching signal arrives at the diode laser, which is switched off thereby. During the second half of the oscillation period $T_{osc}$ a laser-off message travels through the system. This message arrives at the measuring probe at moment $t_5$. a time Interval $\tau_z$ after moment $t_4$ and, after another time interval $\tau_z$, thus at moment $t_e$, the message arrives at the photodiode. After an electronics time delay $\tau_e$, i.e. the time interval to process the output signal of the photodiode to a switch-on signal, thus at moment $t_7$ the diode laser is switched on again.

At first instance, the time the radiation needs to pass the interior optical elements of the TOF system can be neglected as well as the difference between the electronics delays $\tau_e$ In the first and second half of the oscillation period, which difference is caused by the difference between raising and falling times. The oscillation period $T_{osc}$ for a measured distance z is then given by:

$$T_{osc}(z) = 2 \cdot (2\tau_z + \tau_e)$$

Since $\tau_z = z/c$, and the light velocity $c = 3 \times 10^8$ m/s, this results in:

$$T_{osc}(z) = 40 \cdot z/3 + 2\tau_e \ [nanoseconds]$$

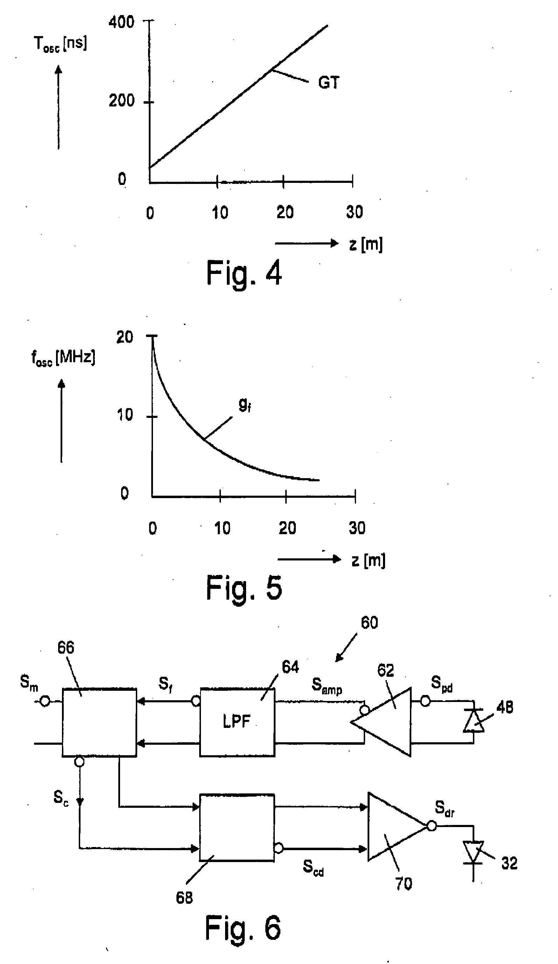

Thus there is a linear relationship between the oscillation period $T_{osc}$ in nanoseconds (ns) and the measured distance z in metres (m) as is shown by graph GT in Fig. 4. The values shown in Fig. 4 are related to an embodiment, which has a maximum oscillation frequency in the order of 20 MHz (for a distance z = 0) and an electronic delay $\tau_e$ in the order of 25 nanoseconds. The variation of the oscillation period is:

$$\frac{dT_{osc}(z)}{dz} = \frac{40}{3} \approx 13.3 \ [\text{picoseconds/mm}]$$

To summarize, the invention provides a time of a-of-flight measuring method, wherein the time is measured in which a pulse of optical radiation energy, generated by the optical radiation source 32, travels from the radiation source 32 to a detector 48 after reflection of the pulse by an object, for measuring the distance z between this object and the radiation source 32. The optical pulse is generated with a pulse repetition dependent on the distance to be measured and the pulse (repetition) frequency or the pulse repetition time or oscillation period $T_{osc}$ is measured.

When using a probe 50 for reflecting the optical pulse, which probe touches the object to which the distance is to be measured, the distance calculated from the time-of-flight measurement to the probe is corrected for the position of the point of reflection of the probe with respect to the object. This correction comprises determination of the orientation of the probe in relation to the object to be measured and the shape and dimensions of the probe.

In a preferred embodiment of the method according to the invention, the radiation source 32 is switched off at an incline of radiation energy received at the detector 48 and the radiation source 32 is switched on at a decline of radiation energy received at the detector 48. The pulse repetition is measured from switching on and off the radiation source 32. Preferably the measurement is corrected for the processing times of the radiation source and corresponding control electronics $\tau_e$, by using a reference measurement as explained above.

Fig. 6 shows a block diagram of the electronic circuit 60 of an oscillation part of the TOF system according to an embodiment of the invention. To increase accuracy and prevent disturbance, this circuit is preferably a differential circuit; i.e. it uses a normal signal and an inverted signal. The circuit comprises an amplifier, for example a trans-impedance amplifier (TIA) 62, which converts the output signal $S_{pd}$ of the photodiode 48, which is an electrical current, into a voltage. This amplifier has such a high gain that it will not reach saturation when it receives maximum power, which will be the case when the distance z = 0 or when the photodiode 48 receives a beam of a reference branch, which will be discussed later on. The required large dynamic range can be obtained by using an amplifier having a non-linear, for example logarithmic gain. The output signal $S_{emp}$ of the amplifier 62 is supplied to a low-pass filter (LPF) 64, which blocks all unwanted frequencies. The filter is designed such that the increase of the rise time of the signal caused by it is negligible so that the oscillation period and the oscillation frequency do not change. Furthermore, within its pass-band, the filter 64 does not induce a phase change, which otherwise would cause a non-linear transfer between the parameters: distance z and oscillation period. The output signal $S_f$ of the filter is supplied to a splitter 66, which supplies at one output a control signal Sc for driving the diode laser 32 and at the other output a measuring signal Sm. Between the splitter 66 and the driver 70 for the diode laser 32 a limiting amplifier 68 may be arranged. The output signal $S_{cd}$ of this amplifier Is supplied to the laser driver 70, which controls the diode laser 32 by means of its output signal $S_{dr}$. Depending on the specific application of the measuring apparatus, a bias current may be supplied to the laser driver so that the diode laser can be faster switched on and off. Thereby it should be taken into account that the averaged optical power is slightly increased then and the modulation index and dynamic range will be slightly reduced.

The time of flight (TOF) measurement may be affected by the delay caused by the electronic circuit. As indicated In Fig. 3, this delay, i.e. the electronic propagation time $\tau_e$ is relative large with respect to the optical propagation time $\tau_z$; when small distances have to be measured, the electronic propagation time $\tau_e$ may even be larger than the optical propagation time $\tau_z$. According to a further aspect, the electronic propagation time is compensated by means of a calbration. Since the electronic propagation time is dependent on several environmental parameters, for example drift in the electronic circuit, a calibration, or reference, measurement should be performed for each distance measurement and preferably near the moment a distance measurement is performed. By means of this reference measurement the electronic propagation time can be determined so that the distance measurement can be corrected for this propagation time.

A TOF system including a reference measurement may be implemented in several ways. In a first embodiment a reflector, for example a suitably aligned plane mirror or a diffuse reflector, but preferably a retroreflector, is arranged at the position z = 0 (in the embodiment of Fig. 2 immediately behind the $\lambda$/4 plate 42) and means are provided to switch this reflector into the path of the laser beam $b_m$ at the moment a reference measurement has to be performed. The beam reflected by the reflector constitutes a reference beam. This beam enters the polarizing beam splitter 38 and is reflected by the interface 40 so that it is directed to the detector or photodiode 48 via the same optical path as the measuring beam that has been reflected by the measuring probe.

In a second embodiment a rotating disc or drum having on its surface one or more, preferably retro-, reflecting areas is arranged in the path of the beam $b_m$, again immediately behind the plate 42. The disc or drum will reflect the beam periodically, whereby the period is determined by the number of reflecting areas and the rotational speed of the disc/drum. The beam that is periodically reflected constitutes a reference beam that is reflected by beam splitter 38 and directed to the photodiode, as in the first embodiment.

Preferably, and according to an embodiment of the invention, the reference beam is generated by using the properties of the polarizing beam splitter 38 and by switching the polarization direction of the beam from the diode laser. The beam splitter translates switching of polarization direction into switching between measuring beam and reference beam. This type of switching is substantially faster than switching by mechanically moving means, which means have to be arranged at a location where the beam has a relative large diameter so that the means has to be relative large, which limits the speed of its movement. By using polarization-direction switching in a TOF system, the number of measurements that can be performed in a time unit is substantially increased, which results In a substantially increased measuring accuracy and allows a high measuring frequency so that a pseudo continuous measurement, which is for example needed for following object contours, becomes possible.

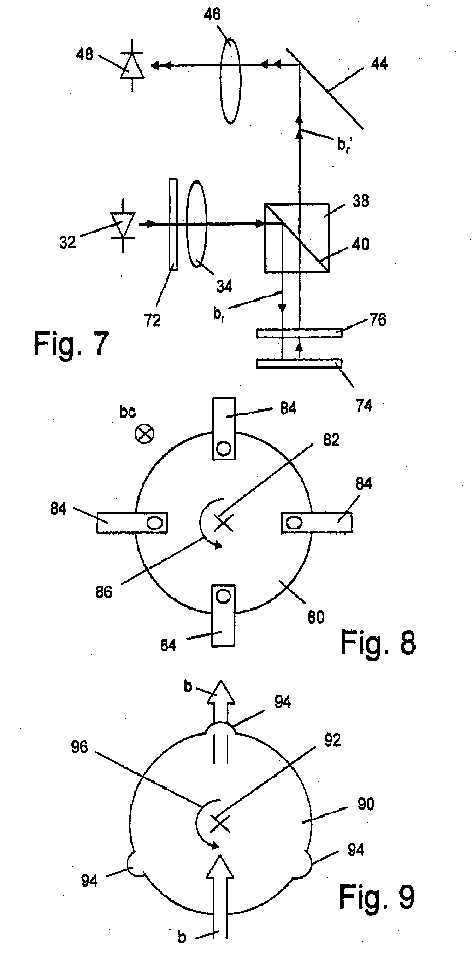

Fig. 7 shows the principle of the reference beam generation by means of polarization switching In an oscillating TOF system according to an embodiment of the Invention. The optical system of this Figure shows, in addition to the components shown In Fig. 2, a polarization switch 72, a $\lambda/4$ plate 76 and a reflector 74, The polarization switch 72 switches the state of the beam emitted by diode laser 32 from a first state, for example P-polarized, into a second state, for example S-polarized and vice versa. If the beam is P-polarized it will pass the polarizing beam splitter 38 and will constitute the measuring beam $b_m$, as shown in Fig. 2. If the beam is S-polarized it will be reflected by the beam splitter towards the reflector 74 and will constitute the reference beam $b_r$, schematically indicated by a single arrow in Fig. 7. Due to the presence of the $\lambda/4$ plate 76 between the polarizing beam splitter 38 and the reflector 74, the reference beam reflected by the reflector 74 and Incident on the beam splitter is a S-polarized beam. The reflected reference beam $b_r$' passes the beam splitter and is reflected by the reflector 44 towards the photodiode 48, schematically Indicated by double arrows. The output signal of the photodiode induced by the beam $b_r$' is processed in the same way as the output signal induced by the beam $b_m$, The beam $b_r$ will provoke oscillation of the TOF system whereby the period of the oscillation $T_{obc} = 2\,\tau_e$. By measuring, during the time that the reference beam is present, the oscillation period or the oscillation frequency of the TOF system, the electronic propagation time $\tau_e$ can be determined. It will be clear that the difference between the photodiode output signals obtained during a distance measurement and a reference measurement respectively is determined by the measured distance z only.

Polarization switching may be performed in several ways; in other words several types of polarization switches 72 may be used. A first type is a Kerr-coll or Pockels-cell. These are electro-optical cells, which are controlled by a voltage and changes the polarization direction of a linearly polarized beam when supplied with a proper voltage. Use of a Pockels-cell or Kerr-cell for rotating the polarization direction is well known in the art of optics. Such a cell allows very fast switching of the polarization direction, but they require high switching voltages and are quite expensive, so that they will be used only in very demanding circumstances.

A cheaper solution for polarization switching, which solution provides satisfying performance, Is switching a $\lambda/2$ plate in and out the path of the beam from the laser. If the $\lambda/2$ plate is arranged in the beam path, it will convert an incident, for example P-polarized beam into an S-polarized beam. Although this solution requires mechanical movement, like the above-mentioned rotating disc with retro reflectors, it allows faster switching because the $\lambda/2$ plate is arranged close to the diode laser and thus may be small. For moving the $\lambda/2$ plate it may be fixed to, for example magnetic means or to a mechanical oscillator (a tune fork) that is driven be a coil (not shown).

A more attractive embodiment of a mechanical polarization switch Is shown in Fig. 8. This switch comprises a wheel 80 having a rotation axis 82 and a number of $\lambda/2$ plates 84 are fixed to the wheel such that they extend outside the wheel. Fig. 8 shows a front view of the wheel, i.e. a view In the propagation direction of the beam from the diode laser. The rotation axis 82 of the wheel is parallel to, but at some distance from the beam axis so that, upon rotation of the wheel, all of the $\lambda/2$ plates are successively switched into and out the laser beam. This beam is represented in Fig. 8 by its cross-section be at the location of the wheel. The wheel 80 may be rotated 86, for example by a DC motor or a synchronous motor so that the polarization of the beam is switched between P-polarization and S-polarization at a high rate.

It is also possible to use a disc with $\lambda/2$ areas on its main surface, provided that this surface is sufficient large with respect to the beam cross section at the location of the disc. This disc should also be provided with a relative large number of $\lambda/2$ areas to limit the speed at which the $\lambda/2$ areas moves across the beam cross-section.

Instead of a wheel, it is preferred to use a drum provided with $\lambda/2$ plates as a polarization switch, as is shown in Fig. 9. The $\lambda/2$ plates 94 are arranged at the outer or Inner surface of the drum 90 and the rotation axis 92 of the drum is perpendicular to the propagation direction of the laser beam b. It will be clear that the drum surface should be transparent. For driving 96 the drum a DC motor or a synchronous motor can be used, for example. Preferably and as shown in Fig. 9, the drum comprises an odd number of $\lambda/2$ plates so that it is warranted that the laser beam can met only one such plate, without using additional (beam folding) optical elements. Preferably, the $\lambda/2$ plates are bent and concentrically with the drum surface so that no radiation Is lost due to skew passage of the radiation through the plates. The required number of λ/2 plates Is determined by the angle-of-incldence dependency of the functioning of these plates and is, for example thirteen or larger.

The same λ/2 plates may also be arranged on a disc, whereby the main surfaces of the plates are perpendicular to the main surface of the disc. In that case the plates need not to be bent (not shown).

In embodiments wherein switching between a measuring beam and a reference beam is performed by means of mechanically driven elements, be it reflective areas or λ/2 plates, during a transition time, i.e. the time the beam needs to transverse an edge of such an element, no probe or reference measurement is possible. The optical path of such embodiments is designed such that at the location of the elements the cross section of the laser beam is small so that the transition time is relatively small. Preferably, the distance between the edges of successive λ/2 plates on a wheel or a drum is relatively large and thus the dimension of the λ/2 plates in the rotation direction 96 is relatively small so that a λ/2 plate is present in the laser beam path only during a relative short time interval. Thus, for each measuring cycle only a small portion of the cycle time is used for the reference measurement and the larger part of the cycle time is available for the distance measurement.

A more preferred embodiment of the polarization switch 72 is a liquid crystal based device, or LC polarization switch, which is derived from the well-known liquid crystal display used for displaying data, graphics, video programs etc. The LC polarization switch comprises a liquid crystal layer and an associated driver and may be constituted by a small version of the LCD such as used is small appliances, for example watches, without a polarizer at one side and an analyzer at the other side of the LC layer and without a pixel structure. By applying proper voltages to the LC layer the polarization direction of a radiation beam passing the LC layer can be switched between the required directions. The absence of a pixel structure provides the advantage that diffraction effects are avoided. The LC polarization switch is very suitable to perform the required polarization switching function in the optical system of Fig. 7. Since LCD's are widely used, a LCD-based polarization switch is a very low-cost component. A liquid crystal switch provides the advantages that no mechanically moving parts are needed and that switching is performed electronically.

Polarization switching can also be performed by means of a ferro-olectrical crystal (FL) component, which is also well known from the art of displays (FLC). The FLC switch functions in a similar way as the LCD, but it has shorter relaxation time and can be switched at a higher rate so that it is very suitable for embodiments of the invention which require very high measuring frequencies.

According to an embodiment of the invention, for obtaining a linearly polarized measuring beam switchable between P-polarized and S-polarized, use can be made of developments in the fiber optical communication field. These developments have resulted in waveguide structures by means of which polarization can be switched between two modes, i.e. P-polarlzed and S-polarized. Such waveguide structures allow realization of substantial improvements regarding compactness, robustness and stabilization of the polarization state and Increasing the switching rate of the polarization switch.

The English abstract of Japanese patent application JP 8050266 discloses a device for supplying a laser beam having switchable polarization direction. The device comprises a diode laser, a waveguide structure having a waveguide channel and a lens for coupling the laser beam into the channel. The diode laser is arranged such that both a TE mode and TM mode are excited. A both sides of the waveguide channel an electrode Is arranged and by applying a small voltage (5 Volt) between the electrodes the refractive index In the channel can be varied. The radiation leaving the channel Is elliptically polarized and a λ/4 plate arranged at the output side of the channel converts this radiation into P-polarized or S-polarized light, depending on the voltage supplied to the electrodes. It will be clear that, if the lens is a planar lens, for example composed of a number of curved planar areas having successively higher and lower refractive index, the diode laser, the lens and the polarization structure can be Integrated onto one substrate. Such an integrated device is very suitable to be used in embodiments of the measuring apparatus of the present invention.

The paper: "Using polarization for Optoelectronic Integrated Devices" In: Symposium on Contemp. Photon Technol, Tokyo, Jan. 2007, pp. 57-60 (also In: www.spt-archlves.com/paper/cpt2007F-2) relates to developments in the field of integrated optics. This paper describes a/o a polarization converter constituted by a narrow waveguide that is asymmetrically shaped; i.e. it has one sloped side-wall. This waveguide can be designed such that it performs a full conversion between TE and TM mode, which means that it behaves like a λ/2 plate. Based on this technology an Integrated polarization switch can be designed. On the same chip the diode laser may be Integrated so that an integrated laser source module is obtained that supplies a laser beam the polarization direction of which can be very fast switched between P and S state.

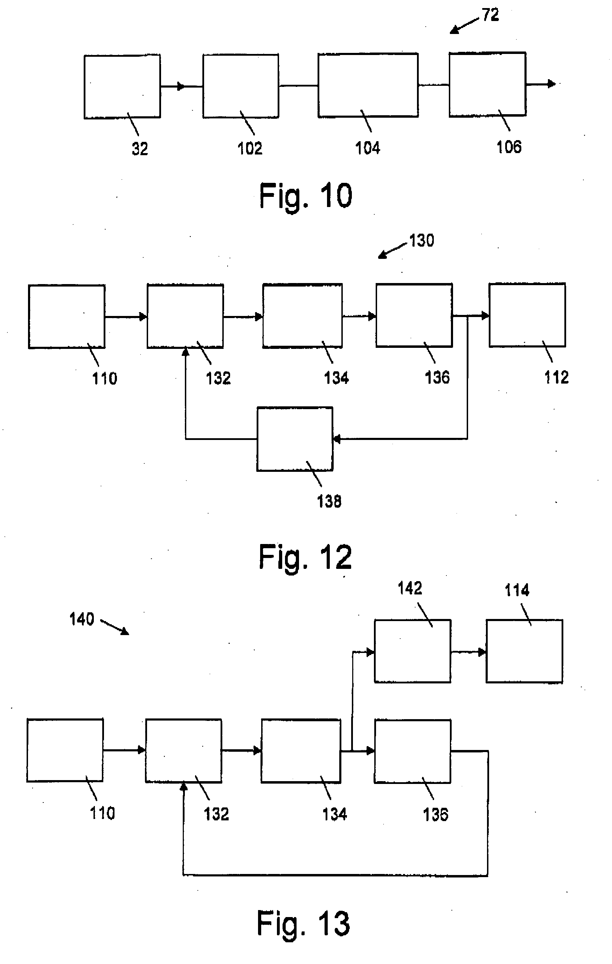

Fig. 10 shows a block diagram of such a module comprising a diode laser 32 and a polarization switch 72. The polarization switch 72 includes a first polarization converter 102 and a second polarization converter 106 and a phase shifter 104 arranged between the converters. This module is derived from the Mach-Zehnder Interferometer (MZI) module shown In Fig. 8 of the above cited paper: "Using Polarization for Optoelectronic integrated Devices" of which MZI module the polarizer has been removed. The converters are so-called half-converters, which means that they behave like λ/4 plates. The phase shifter 104 is an electro-optical phase shifter that uses the Pockels effect. By applying the required switching voltages to this shifter the polarization of a radiation beam propagating through the module can be switched between the P-state and the S-state and vice versa. Switching time can be very small, for example of the order of one nanosecond and the tuned polarization direction is very stable. Since the diode laser and the polarization switch are integrated on one chip, they are automatically aligned.

A final integration of a diode laser and polarizing switching means is disclosed in, for example U.S. patent 6,091,745 and the documents cited therein. The disclosed semiconductor laser is a distributed feedback (DFB) laser, which is capable of switching a polarization mode of Its output light. It comprises a plurality of regions within the laser cavity, which regions each include an active layer and a diffraction grating whereby the effective refractive indices of the regions are different from each other and a region where the effective refractive index Is larger than the other region(s) is provided with a $\lambda/4$ phase shift section. By controlling a current injected In the latter region, the polarization mode can be switched. Assuming that this diode laser, which is designed for the optical communication field, functions satisfactorily, it may be included in the present measuring apparatus to replace a diode laser and a distinct polarization switch.

The diode laser 32 may also be a vertical cavity surface emitting laser (VCSEL). Developments on such type of laser are going on to furnish such laser which is capable to switch the polarization direction of its beam between two mutual perpendicular directions. In case such a laser is used In the apparatus the polarization switch is embedded in the laser and its driving means.

For measuring the distance between the base unit and the measuring probe either the period or the frequency of the distance-dependent oscillation of the TOF system may be determined. Determining the period time provides the advantage that the required parameter is measured directly, because the period time is directly proportional to the distance. This type of measurement may require a high frequency counter clock. This is not the case if analogue signal processing is used or if a time-to-digital conversion is used for digital processing. In the latter case the resolution of the measurement is constant across the whole measurement range.

For more accurate measurements and to prepare the measurement apparatus for future, more sophisticated, applications, preferably the oscillation frequency is determined. Thereby the number of oscillations per time unit, for example a second or a millisecond, is determined. Fig. 5 shows a graph g representing the variation of the oscillation frequency $f_{oac}$ in Megahertz (MHz), as a function of the measured distance z in meters (m), This graph is not linear, but has a 1/x characteristic and the resolution varies across the measurement range. However for the envisaged applications this variation is quite acceptable.

The start of counting the number of oscillations for frequency measurement needs not to be randomly, but several known possibilities can be used. For example, counting can be triggered by the slope of the signal to be measured. Another option is locking of a digital phase locked loop (PLL) or frequency locked loop (FLP) as will be explained herein after. These provide the advantage that they provide directly the quantity (parameter) to be measured; i.e. the frequency of a voltage controlled oscillator and that they function as a frequency filter. This is very advantageously because the bandwidth to be measured is very small, for example 10 Hz, whilst the frequencies to be measured may amount to the order of 10 MHz.

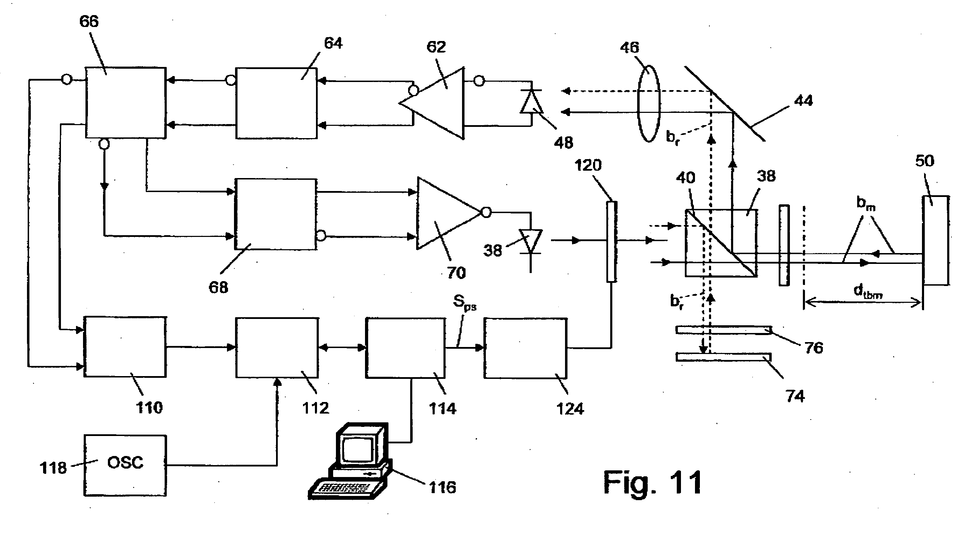

The components used for performing the frequency measurement are shown in Fig. 11. This Figure shows a block diagram of the complete TOF measuring system according to an embodiment of the invention and thus includes also the components already shown In Figs. 2, 6 and 7. The measuring beam $b_m$ and the reference beam $b_r$ are represented by a solid line and an interrupted line, respectively. The frequency measuring subsystem includes a differential Input stage 110 that may have a single ended (SE) output. This stage receives a dIfferential signal, the oscillator signal from the signal splitter 66 and supplies a single output signal to a gated frequency counter 112, for example a 24 bits counter. Since the number of signal periods within a preset time interval, i.e. gate time, is measured, counter 112 may be called a pulse counter.

As an alternative for the dIfferentiallsingle-ended circuit 110 also a differential/differential circuit may be used. It Is also possible that the measuring signal supplied to the counter is a low voltage differential signal (LVDS). At the counter this signal is converted into a single ended signal. As a further alternative a full differential system may be used having differential/differential sub-systems adapted to each other.

The counter gate time is determined by a crystal oscillator 118, which is coupled to the counter 112 and has an oscillation frequency of, for example 40 MHz. From the oscillator a predetermined gate time is counted off. At the beginning of a gate time the counter 112 Is re-set. Next, the counter counts the number of oscillations occurring during this gate time. At the end of the gate time the counter state Is loaded into a, for example 24 bits, slide register of a processor, preferably microprocessor or micro-controller 114. At the same moment microprocessor 114 generates an interrupt. During a next gate time, wherein the counter counts a next series of oscillations, the microprocessor 114 reads out the counter state reached at the end of the previous gate time, via a serial interface, The oscillations occurring during a distance measurement and a reference measurement, which measurements preferably are performed alternately, are counted and processed in the same way. From the results $CNT_{mass}$ and $CNT_{ref}$, respectively of both types of measurements the value of the distance z is calculated in microprocessor 114 according to:

$$z = (c/4)\ T_{gate}.\ (1/CNT_{meas} - 1/CNT_{ref})$$

wherein $T_{gate}$ Is the counter gate time. Thereby It is assumed that the gate time for the distance measurement Is equal to that of the reference measurement. If this is not the case, $T_{gate}$ in the formula has to be replaced by different gate times In the numerators of the fractions. The calculated z values are filtered and then sent to a host device 116, for example a note book computer. The filter that Is used may be a so-called running average filter. If another filter is used or If filtering is carried out in the host device, the maximum sample frequency, i.e. the minimum gate time depends on the maximum communication time, i.e. the time that is needed to transmit data to the host device. The communication time should be smaller than the gate time.

Fig. 11 also shows that microprocessor 114 also supplies a control signal Sps for the polarization switch, for example switch 72 in Fig. 7, for switching between distance measurement and reference measurement. In the embodiment of Fig. 11 this switch 120 is a LC switch, as discussed herein above. Signal $S_{ps}$ is thus a signal for controlling a driver 124 for the LC switch 120. The separate diode laser 32 and the polarization switch 120 in Fig. 11 may be replaced, for example by the integrated module of Fig. 10, which module allows very fast switching and provides a stable polarization direction for the beam.

The frequency measurement as such may be conventional and then does not need further explanation. However the Invention provides a novel and advantageous way of measuring the distance related, or oscillation, frequency, which should be distinguished from the sample frequency. Measurement of the oscillation frequency is based on the following considerations. The oscillation frequency Is measured digitally, which means that it is a discrete measurement both in amplitude, or magnitude, and in time. The sample frequency is determined by the gate time, whereby the minimum gate time Is limited by the minimum TOF oscillation frequency, i.e. the oscillation frequency at maximum distance z. Thus the sample frequency Is limited. After the oscillation frequency, i.e. the frequency to be measured, has been measured all noise signals outside the oscillation frequency band can be suppressed, for example by means of a digital filter. Since in the envisaged embodiments no anti-allasing filter is used, the problem may occur that higher noise frequencies are folded down, i.e. converted into lower frequencies, so that after sampling they can not been distinguished from the oscillation frequencies to be measured. As a consequence, the frequency of the oscillation frequency changes, i.e. the number of such changes per time unit should be limited. In the new oscillating TOF system this is realised by means of a phase locked loop (PLL) or a frequency locked loop (FLL). Such loop provides the substantial advantage that it performs a double function, namely frequency counter and filter.

Fig. 12 shows a first embodiment of a phase locked loop 130, which Is arranged between the circuit 110 of Fig. 11 and a digital frequency counter, 112 In Fig. 11. PLL 130 includes a phase comparator 132, a loop filter 134, a voltage controlled oscillator (VCO) 136. A phase locked loop as such Is well known in the art and needs no detailed description. Filter 134 limits the rate at which the VCO 136 can vary the frequency. Without further measures VCO 136 would output the required filtered value of the oscillation frequency. However in this embodiment In the feedback loop between VCO 136 and phase comparator 132 a divider 138 is arranged, which divides the oscillation frequency by a number N. Thus VCO 136 supplies the filtered value of N times the oscillating TOF frequency. Including divider 138 in the loop provides the great advantage that the resolution of the measurement (at the output of counter 112) is enhanced by a factor N.

Fig. 13 shows an embodiment of a phase locked loop 140 for a system that does not count frequency and does not include the frequency counter 112 of Figs. 11 and 12. Loop 140 is directly coupled to the slide register 114, Now the analogue drive voltage for VCO 136 is determined by means of an analogue to digital convertor (ADC) 142 as a measure for the distance z. The embodiment of Fig. 13 requires that the relationship between the VCO drive voltage and frequency Is well known and stable. Therefore this embodiment is an intermediate step to a better embodiment, namely a full digital phase locked loop. Such a loop is obtained when all analogue blocks of the foregoing embodiments are replaced by their digital equivalents. In such a digital PLL the output of the filter 134 is a direct representation of the measured distance z.

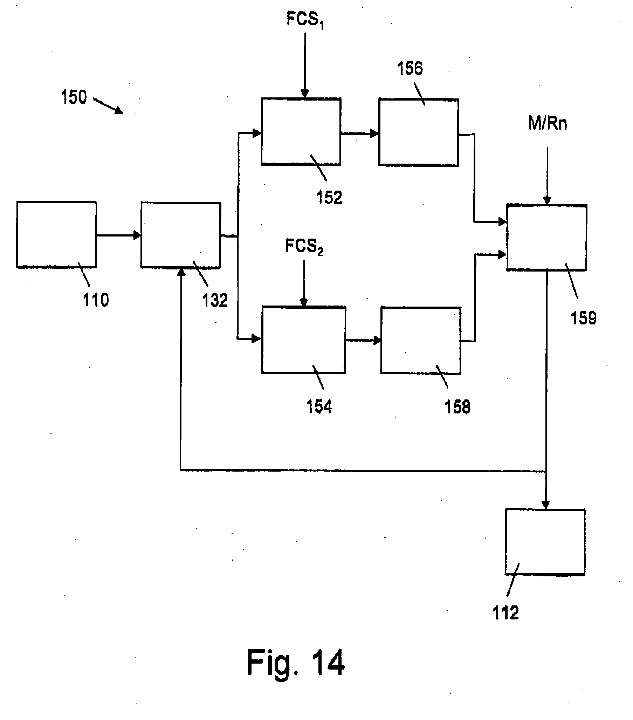

Fig. 14 shows an embodiment of a phase locked loop that is in particular suitable for distance en reference measurement. Every time a switch is made from distance measurement to reference measurement, and vice versa, a step response should take place in the PLL, which means that the PLL should set for the supplied signal and the filter in the loop should have reached its end value. Only after these requirements have been fulfilled, thus after a delay, the frequency can be measured. Such delay can be reduced substantially by doubling some of the blocks of the PLL, as shown in Fig. 14. The embodiment 150 of this Figure is comparable with that of Fig. 12 without divider, i.e. for N = 1. Part of the PLL is now is split up into two branches: a first, measuring, branch, which includes a first loop filter 152 and a first VCO 156 for measuring the distance z and a second, reference, branch including a second loop filter 154 and a second VCO for reference measurement. Filter control signal FCS, and $FCS_2$ are now supplied to loop filters 152 and 154, respectively for setting the filters In an active, i.e. tracking, state or In frozen, i.e. hold state. In terms of phase locked loop art these control signals may be characterized as M/Rn and R/Mn, respectively. During reference measurement the preceding value of the measuring filter 152 is hold and the reference branch is active, and vice versa. During the time period that a distance measurement is performed the frequency of VCO 158 Is adapted to that of filter 154 and during the time period that a reference measurement is performed the frequency of VCO 156 is adapted to that of filter 152. In this way large transitions of the VCO's 156 and 158 can be avoided when switching. This switching is performed by means of switch 159 that is controlled by signal FCS,. At each moment of switching filters 152 and 154 already have almost the required value and the PLL is very nearly set in the distance measuring state or in the reference measuring state.

Moreover, since the range of VCO 158 in the reference branch may be small, this oscillator may be a crystal oscillator Instead of a LC oscillator, which can handle a large frequency range. Furthermore, filtering in the reference branch may be strong, i.e. heavy suppressing because in principle only drift, having a very low frequency, needs to be filtered out. In this way a very accurate reference measurement Is obtained. Also in the phase locked loop of Fig. 14 a divider 138, shown in Fig. 12, may be included in the feed back line to phase comparator 132.

Splitting of the PLL in a measuring branch and a reference branch, such as shown in Fig. 14 for the embodiment of Fig. 12, Is also possible in any embodiment of the PLL. Most conveniently this is realized in a full digital PLL, because this already includes a required memory function.

The phase locked loop in Figs. 12-14 and in the mentioned full digital PLL may also be replaced by a frequency locked loop. In that case a frequency comparator should replace phase comparator 132.

Compared with an interferometer system for measuring distances a TOF system provides the advantage that during a measurement no reference is made to a preceding measurement so that the measuring beam may be interrupted without destroying a measuring cycle. Moreover an interferometer system is more complex, thus substantially more expensive and its performance is very dependent on environmental parameters. The oscillating TOF system using reference measurement provides further substantial advantages. The polarization switch allows very fast measurements so that a higher measuring bandwidth becomes possible. This Is advantageous in particular, but not exclusively, for measuring contours. The new TOF system can measure distance differences as low as 0,1 mm at a rate of, for example thousand measurements per second. Moreover the manufacturing costs of the oscillating TOF system may be the same as that of a conventional system. Thus, the oscillating TOF system itself is an inventive system, irrespective of its use in the apparatus for measuring spatial coordinates and It may replace conventional TOF systems In applications where a higher accuracy and/or lower measuring times are required.

A prerequisite for the present measuring apparatus is that the measuring probe 50 reflects sufficient measuring beam radiation back into the base unit. Under circumstances and if the measuring beam has a large Intensity, simple means can be used, for example the reflectivity of the backside itself of the measuring probe or the backside may be coated with a reflective layer or a reflective element such as a plane mirror reflector may be fixed to this backside.

Preferably the backside op the measuring probe is provided with retroreflective means. Since such means reflects the measuring beam along the path travelled by the Incident measuring beam, In principle all of the radiation coming from the base unit will return to and re-enter this unit. This means that intensity of the measuring beam may be moderate and substantially lower than the intensity that would be needed if the reflector on the measuring probe were an omnidirectional or a diffuse reflector, which would reflect only a small portion of the measuring beam radiation to the base unit. Providing the measuring probe with retroreflective means allows use of a diode laser source and safe beam intensity.

The retroreflective means may be constituted by a corner cube, which is a well-known retroreflective element. Alternatively, a flat assembly of a number of small corner cubes may be used.

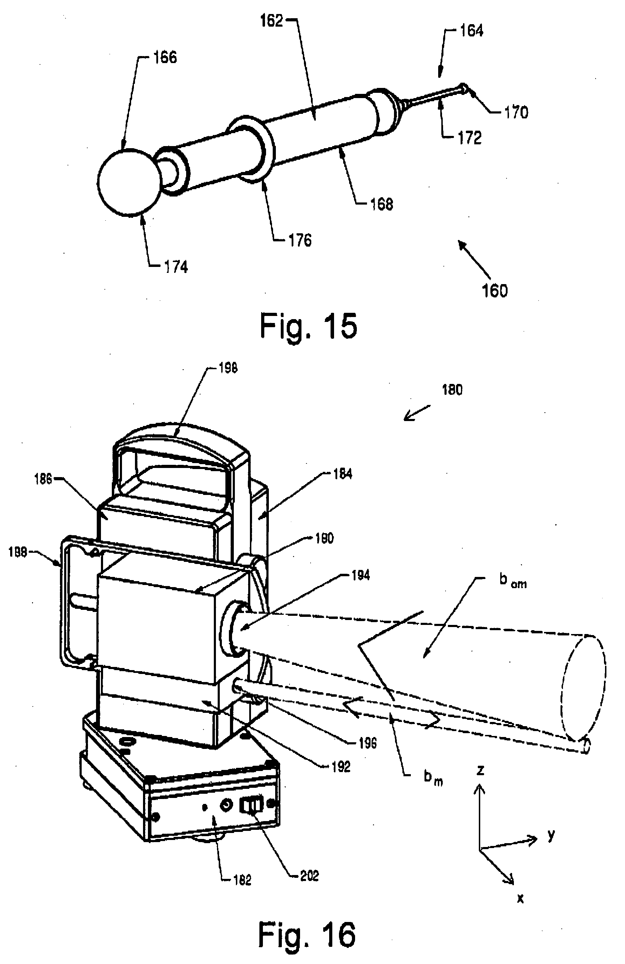

Fig. 15 shows a convenient embodiment 160 of a measuring probe. This probe is constituted by a cylindrical body 162 having a front portion 164 for touching an object and a back portion 166 facing the base unit during use. The bodies' portion 168 between the front portion and the back portion forms a suitable grip. The front portion may end in a tip 170 that may have several shapes. For example, a sharp tip is suitable for carrying out real 3D measurements and a spherical tip is suitable for measuring rough surfaces. The measuring apparatus may be furnished with several types of tips, which are easy interchangeable so that an operator always can use a tip that is particularly suitable for the momentarily measuring Job. By interposing a thin rod 172 between the tip and the main body some distance is created between the two so that the tip may also be positioned at object areas, which otherwise cannot be accessed.

The back portion 166 of probe 160 may be provided with a spherical body 174, for example of glass, wherein a retro reflector in the form of a corner cube may be arranged. The back portion 166 may also be flat and provided with a reflective layer or a reflective element.

In addition to the distance between the back portion of the measuring probe and the base unit, also the orientation of the probe should be measured to obtain the real position of the probe tip, i.e. the object point to be measured. The results of the probe orientation measurement are processed together with the result of the distance measurement to obtain the reliable and accurate three-dimensional position of the probe tip. For measuring the probe orientation, i.e. the azimuth and elevation angle of the probe, the base unit includes optical orientation-sensing means, preferably a digital camera. This camera may have a CCD or CMOS sensing element and dedicated software to allow it to function as a position-sensitive sensor, I.e. a sensor that can determine the positlon(s) where radiation is incident on it. The objective lens system of the camera forms an Image of the measuring probe on the camera (CCD or CMOS) sensor. From the position and shape of this image the orientation of the measuring probe can be determined by means of the electronic processing circuitry of the camera and suitable software for reading out the sensor cells.

In order to enhance the quality of the probe image formed on the camera sensor so that reliability and accuracy of the probe orientation measurement is increased, the probe is provided with radiation means. This means may be a light emitting diode (LED) which may be positioned for example in a (retro-) reflector that is arranged in or on the measuring probe.

Preferably the measuring probe is provided with an external radiation-emitting configuration whereby the image pattern of this configuration formed on the sensor of the orlentation-sonsing means changes upon change of orientation of the measuring probe.

The Image pattern has two parameters: the position of the image with respect to the sensor and the shape of this image. External is understood to mean that the configuration emits radiation into the space that surrounds the probe. The configuration may be any radiation emitting configuration which Image pattern on the sensor changes upon movement of the measuring probe in any direction other than the distance measuring direction. For example, the configuration may be formed by two or four arm-like elements each comprising a radiation source, for example at least one LED and being fixed to the probe.

Alternatively, the configuration may be constituted by a number of individual LED's arranged in a ring around the measuring probe and the sensing means may be constituted by a position sensitive detector, whereby the LED's are successively switched on and off so that at any moment only one of the LED's Is switched and the others are switched off.

Preferably this configuration Is constituted by a radiation-emitting ring shaped element 176 as shown in Fig. 15. This element forms a bright image on the sensor, which image is ring-shaped only in case the axis of the measuring probe is in line with the measuring beam axis and otherwise is elliptically shaped in dependency of the orientation of the measuring probe. Compared with images of other radiating configurations, the position and shape of the image of a radiating ring can be determined with higher precision so that a radiating ring-shaped element is very suitable for determining the orientation of the measuring probe. Radiating ring may include one or more LED(s), whose radiation may be distributed over the ring by means of totally internal reflection.

As already remarked, the probe-orientation-sensing means may be formed by a position-sensitive detector, which may for example cooperate with a ring of successively radiating LED's on the probe surface. Such a detector is well known in the optical measuring technique for determining displacement of an image.

Preferably the orientation-sensing means is constituted by at least one digital camera. This provides a less complicated solution for determining the orientation of the measuring probe.

Even more preferred is that the probe-sensing means includes two digital cameras, which have a large viewing angle and a small viewing angle, respectively.

This embodiment allows high-accuracy measurement of the orientation and position of the measuring probe at both larger distances and smaller distances. Moreover, it is possible to use firstly the camera with the larger viewing angle for fast and coarse localizing the measuring probe and then perform fine localization with higher accuracy by means of the camera having the smaller viewing angle. Instead of two cameras also one camera with a zoom function may be used as probe-orientation sensing means. If required, for example for easy operation of the apparatus, the zoom function of such a camera may be limited to two zoom set points for large and short distance, respectively, which points may be set by calibration.

In practice it may be very helpful for the user If the apparatus allows keeping the measuring beam directed towards the measuring probe once the measuring probe has been localized. To realize such probe tracking the base unit may be provided with actuator means for moving portions of the base unit so that the direction of the measuring beam is controllable in two directions (elevation and azimuth). These actuator means are controlled by an output signal of the orientation-sensing means.

Fig. 16 shows a perspective view of the base unit 180. This unit comprises a base compartment 182 upon which a vertical compartment 184 is mounted. At one main side 186 of this compartment a mounting frame 188 is arranged, which carries a first module 190 and a second module 192. The first module accommodates the probe-orientation sensing means, for example one or two digital cameras and is provided with a transparent window 194 to receive an orientation measuring beam $b_{om}$, i.e. a beam of radiation from the radiating configuration, for example a radiating ring on the measuring probe. The second module accommodates the TOF system and Is provided with a transparent window 196 to emit the distance-measuring beam $b_m$ towards the measuring probe and to receive measuring beam radiation reflected at the backside of this probe. For easy transportation of the base unit a handle 198 is mounted on the vertical compartment.

The vertical compartment 184 is revolving mounted on the base compartment 182 so that modules 190 and 192 can be rotated around a z-axis to perform azimuth scanning. The mounting plate 188 is revolving mounted on the base compartment 182 so that the modules 190 and 192 also can perform elevation scanning.

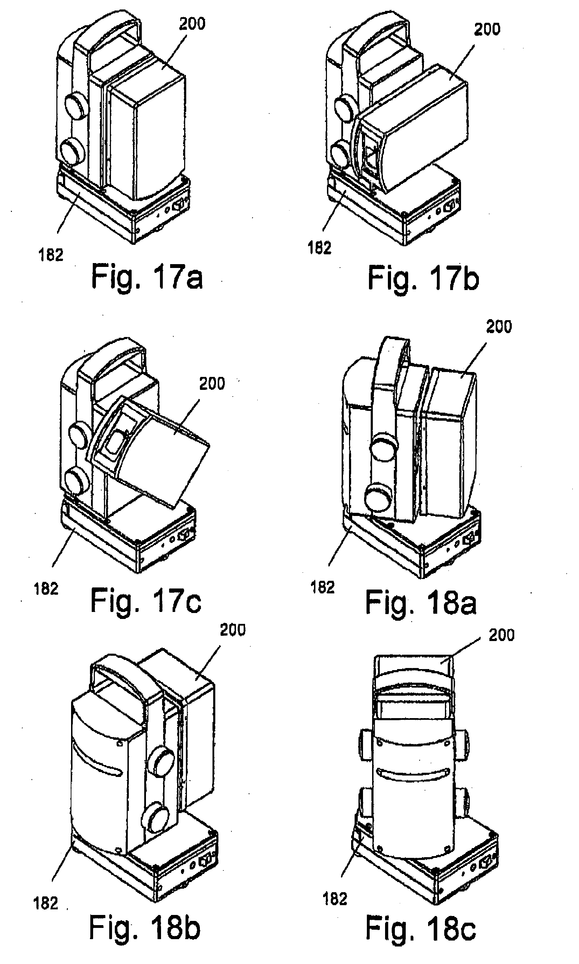

To illustrate this, Figs. 17a-17c show several positions, with respect to the vertical module 184, of a compartment 200 that accommodates modules 190 and 192. Fig. 17a shows the initial position, which is also the transport position. The transparent windows of the modules are facing the base compartment 182 so that they are well protected. In Fig. 17b the compartment 200 has been rotated over 90° so that the modules are in horizontal position. In Fig. 17c the compartment has been rotated over another 45° so that the modules "look" upwardly. Fig. 18a shows the situation wherein the vertical compartment, and thus also compartment 200 has been rotated over 45° with respect to the initial position of Fig. 17a. In Figs. 18b and 18c this rotation Is 90° and 135°, respectively. In this way the orientation of the measuring $b_m$ can be varied over a large range of azimuth and elevation angles.

Base compartment 182 includes a motor (not shown), which drives an axis fixed to the vertical compartment 184 to move this compartment for azimuth scanning. The vertical compartment includes a motor (not shown), which an axis fixed to the mounting plate 188 to move the modules for elevation scanning. These motors may be provided with encoders for measuring the azimuth- and elevation angles, respectively of modules 190 and 192. The base compartment 182 Is provided with control knobs, such as on/of switch 202 and means for transport of date to an external processor, for example that of a notebook computer.

The measuring results obtained from the probe-orientation-sensing means, or camera(s) and the associated signal processing means are used for two purposes. At the one hand these results, i.e. the measured azimuth and elevation data are used together with the azimuth and elevation data of the base unit to calculate the azimuth and elevation data of the tip 170 at the front portion of the probe 160. With the result of this calculation and the measured distance between the base unit and the back side of the probe the proper distance between the base unit and the tip, thus the object point to be measured, is calculated. These calculations also use another parameter, namely the calibrated distance between the tip and the radiation-emitting configuration, for example ring 176, on the probe. At the other hand the signals from the orientation sensing means are processed to a drive signal for actuator means, for example motors, within the base unit. By means of these motors the orientation of the TOF system or part of it can be changed to control the direction of the measuring beam such that this beam is always fully incident on the reflector at the back side of the measuring probe and optimally reflected. In this way the distances can be measured reliably and with high precision.

The new measuring apparatus distinguishes from conventional apparatuses by the following features:

- it provides high performance for relative low costs;
- it allows continuous measurement;
- incidental blocking of the laser beam causes no problem, because the camera can quickly trace the measuring probe and in the TOF measurement no reference to a preceding measurement is needed;
- the light emitting ring and the retroreflector on the probe allow any orientation of the probe.

The latter feature allows construction of a probe, which can measure around the corner. To that end it has only be defined in the software what the positions of the radiation emitting ring and the tip are with respect to the retroreflector.

The oscillating time-of-flight measuring system described herein above and wherein the radiation source is not only switched on, but also off by reflected radiation or non-radiation, respectively returning in the transceiver, preferably such a system utilizing a reference beam and more preferably utilizing polarization switching has been conceived for the measuring apparatus that comprises a base unit and a measuring probe. However, the excellent performance of this system makes it very suitable for other and new applications. Thus, the present Invention includes not only the measuring apparatus provided with such a specific TOF system, but also this TOF system per se and its several embodiments, including the method of operation of the TOF system, which system and method are novel and inventive compared with conventional time-of flight measuring systems.

The invention is further comprised in a computer program, comprising program code means, which computer program functions to carry out the steps and processing of the TOF and distance measurement according to the invention, when loaded in a working memory of a computer and executed by the computer, such as the microprocessor 114 shown in Fig. 11. The computer program may be arranged for being Integrated In or added to a computer application for joint execution of the computer program and the computer application by a computer. The computer program may be arranged as program code means stored on a medium that can be read by a computer, and arranged for integrating the program code means in or adding the program code means to a computer application for joint execution of the program code means and the computer application by a computer.

The present invention may be provided as a computer program product, which may include a computer readable medium having stored thereon instructions which may be used to program a computer (or other electronic devices) to perform a process according to.the present invention.

The computer readable medium may include, but is not limited to, floppy diskettes, optical disks, CD-ROMs (Compact Disc-Read Only Memories), and magneto-optical disks, ROMs (Read Only Memories), RAMs (Random Access Memories). EPROMs (Erasable Programmable Read Only Memories), EEPROMs (Electromagnetic Erasable Programmable Read Only Memories), magnetic or optical cards, flash memory, or other type of media/computer readable medium suitable for storing electronic instructions.

Moreover, the computer program product may be downloaded, wherein the program may be transferred from a remote computer (e.g., a server) to a requesting computer (e.g., a client) by way of data signals embodied In a carrier wave or other propagation medium via a communication link (e.g., a modem or network connection). Accordingly, a carrier wave shall be regarded as comprising a computer readable medium.

The invention is not limited to the examples and embodiments disclosed above and the accompanying drawings. Those skilled In the art will appreciate that many additions and modifications can be made based on the inventive idea embodied in the present description and drawings, which additions and modifications are all to be comprised by the attached claims.

**Claims**

1. An apparatus for measuring spatial co-ordinates of an object, which apparatus comprises a portable base-unit and a movable hand-held probe having a tip for touching the object, the base unit being provided with measuring means for measuring the distance between the probe and the base-unit, **characterised in that** the measuring means comprise a transceiver comprising an optical radiation source and capable of emitting and receiving a pulsed measuring beam, **In that** a probe side facing the base unit during use is configured to reflect radiation of the measuring beam received from the transceiver back towards the transceiver, **in that** the transceiver is configured to perform time-of-flight measurements and **in that** the base unit comprises optical orientation-sensing means to determine the orientation of the probe.

2. An apparatus as claimed in claim 1, wherein the time of flight measuring system is an oscillating time of flight measuring system, wherein the oscillation period is determined by the momentarily distance between the base unit and the measuring probe.

3. An apparatus as claimed in claim 2, wherein the transceiver comprises a pulsed radiation source supplying the measuring beam and an associated source drive circuit, radiation-sensitive detection means for receiving measuring beam radiation from the probe side facing the base unit and for converting this radiation into an electrical signal, electronic signal processing means for converting the electronic oscillating signal from the detection means into a drive signal for the source driver circuit, and electronic measuring means for determining the time behaviour of the electronic oscillating signal.

4. An apparatus as claimed in claim 3, wherein the electronic measuring means are constituted by means for measuring the oscillation frequency.

5. An apparatus as claimed in claim 3 or 4, comprising optical means for generating a reference beam within the base unit and for directing this beam to the said detector means to provide a reference signal that is indicative of the optical and electronic run time within the base unit, which signal Is processed by the electronic measuring means to correct the measured distance.

6. An apparatus as claimed in claim 5, wherein the reference beam generating means comprises a polarization-sensitive beam splitter arranged in the path of the beam supplied by the radiation source and polarization switching means to switch the linear polarization state of this beam between two mutually perpendicular directions.

7. An apparatus as claimed in claim 6, wherein the polarization switching means is constituted by a polarization switch arranged between the radiation source and the polarization-sensitive beam splitter.

8. An apparatus as claimed in claim 7, wherein the polarization switch is a rotatable body provided with a number of half-wavelength plates spaced from each other, which plates, upon rotation of the body, are successively switched into the radiation source beam.

9. An apparatus as claimed in claim 7, wherein the polarization switch is constituted by a liquid crystal based element and an associated driver.

10. An apparatus as claimed in claim 7, wherein the polarization switch is constituted by a phase rotating element that Is arranged between two polarization rotating elements for rotating polarization over 90°, the three elements and the diode laser being Integrated on one substrate.

11. An apparatus as claimed in any one of the preceding claims, wherein the measuring probe is constituted by a cylindrical body having a front portion for touching the object and a back portion facing the base unit during use.

12. An apparatus as claimed in claim 11 wherein the back portion of the measuring probe Is provided with retroreflective means.

13. An apparatus as claimed in any one of the preceding claims, wherein the measuring probe is provided with an external radiation emitting configuration which image, formed on the sensor of the sensing means, changes its pattern upon change of orientation of the measuring probe.

14. An apparatus as claimed In claim 13, wherein the radiation- emitting configuration is constituted by a least one radiation-emitting ring shaped element.

15. An apparatus as claimed in claim 13 or 14, wherein the orientation-sensing means is constituted by at least one digital camera.

16. An apparatus as claimed in claim 13, 14 or 15, wherein the orientation-sensing means are constituted by two digital cameras, which have a large viewing angle and a small viewing angle, respectively.

17. An apparatus as claimed in any one of claims 1-16, wherein the base unit includes actuator means for controlling the direction of the measuring beam such that this beam remains directed towards the measuring probe, which actuator means are controlled by an output signal of the orientation-sensing means.

18. A time-of-flight measuring system for measuring distance between an object and the system comprising a transceiver, which includes a pulsed radiation source supplying a measuring beam and an associated source drive circuit, and radiation-sensitive detection means for receiving measuring beam radiation reflected by the object and for converting this radiation into an electrical signal, **characterized by** electronic signal processing means for converting the electronic signal from the detection means Into a drive signal for the source drive circuit to switch the source on and off in dependency of the momentarily said distance and by electronic measuring means for determining the frequency of the radiation source pulses.

19. A time-of flight measuring system as claimed in claim 18, comprising optical means for generating a reference beam within the base unit and for directing this beam to the said detection means to provide a reference signal that is indicative of the optical and electronic run time within the base unit, which signal Is processed by the electronic processing measuring means to correct the measured distance.

20. A time-of-flight measuring system as claimed in claim 19, wherein the reference beam generating means comprises a polarization-sensitive beam splitter, arranged in the path of the beam supplied by the radiation source, and polarization switching means for switching the polarization direction of this beam between two mutually perpendicular directions.

21. A time-of-flight measuring system as claimed in claims 18, 19 or 20, wherein the electronic measuring means Includes a differential Input stage and a frequency counter, wherein between the Input stage and the frequency counter one of a phase locked loop and a frequency locked loop is arranged.

22. A time-of-flight measuring system as claimed in claim 21, wherein part of the loop is split up in a measuring branch and a reference branch each comprising a loop filter and a voltage controlled oscillator and In that the loop includes a switch for switching between distance measurement and reference measurement.

23. A time of a-of-flight measuring method, wherein the time is measured in which a pulse of optical radiation energy, generated by a source of optical radiation, travels from said radiation source to a detector after reflection of said pulse by an object, for measuring a distance between said object and said radiation source, **characterized in that** said optical pulse is generated with a pulse repetition dependent on said distance and wherein said pulse repetition Is measured.

**24.** A method according to claim 23, wherein said radiation source is switched off at an incline of radiation energy received at said detector and wherein said radiation source is switched on at a decline of radiation energy received at said detector, wherein said pulse repetition Is measured from said switching on and off of said radiation source.

**25.** A computer program product, comprising program code means stored on a computer readable medium, which computer program operates to carry out the method according to claim 23 or 24, when said computer program is loaded in a working memory of a computer and is executed by said computer.

Fig. 1 (prior art)

Fig. 2

Fig. 3

Fig. 4

Fig. 5

Fig. 6

Fig. 7

Fig. 8

Fig. 9

72

|32| → |102| — |104| — |106| →

32    102    104    106

Fig. 10

130

|110| → |132| → |134| → |136| → |112|

110    132    134    136    112

|138|

138

Fig. 12

142    114

140

|110| → |132| → |134| → |136|

110    132    134    136

|142| → |114|

Fig. 13

Fig. 11

Fig. 14

Fig. 15

Fig. 16

200

182

**Fig. 17a**

200

182

**Fig. 17b**

200

182

**Fig. 17c**

200

182

**Fig. 18a**

200

182

**Fig. 18b**

200

182

**Fig. 18c**

Europäisches
Patentamt
European
Patent Office
Office européen
des brevets

**EUROPEAN SEARCH REPORT**

Application Number

EP 08 01 4640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 166 809 A (PETTERSEN ALF D [NO] ET AL) 26 December 2000 (2000-12-26) | 1,11-17 | INV.<br>G01B11/00 |
| Y | * column 3, line 38 - column 6, line 34; figures 1-5 *<br>* column 7, lines 23-40; figure 8 *<br>----- | 2-10 | G01C3/08<br>G01S5/16<br>G01S17/08 |
| Y | DE 44 14 514 A1 (DEICHL KLAUS [DE]) 2 November 1995 (1995-11-02)<br>* page 5, line 8 - page 7, line 66; figures 3-6 *<br>----- | 2-10 | |
| A,D | US 5 898 484 A (HARRIS STEVEN E [US]) 27 April 1999 (1999-04-27)<br>* column 1, line 41 - column 2, line 14 *<br>* column 4, line 55 - column 6, line 49; figures 1-5 *<br>----- | 1-17 | |
| A,D | US 6 785 973 B1 (JANSSEN ANTONIUS JOHANNES [NL]) 7 September 2004 (2004-09-07)<br>* abstract; figure 10 *<br>----- | 1-17 | |

TECHNICAL FIELDS SEARCHED (IPC)

G01B
G01C
G01S

The present search report has been drawn up for all claims

| Place of search | Date of completion of the search | Examiner |
|---|---|---|
| Munich | 22 January 2009 | Beyfuß, Martin |

Europäisches
Patentamt

European
Patent Office

Office européen
des brevets

**Application Number**

EP 08 01 4640

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

see annex

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 1-17

An apparatus for measuring coordinates comprising a base unit and a hand-held probe with a tip for touching an object, the base unit being provided with means for measuring the probe distance, said means comprising a transceiver with an optical radiation source, the transceiver being capable of emitting and receiving a pulsed measuring beam, a probe side being being configured to reflect the measuring beam back towards the transceiver, the transceiver being configured to perform time-of-flight measurements and the base unit comprising optical means to determine the orientation of the probe.

---

2. claims: 18-25

An apparatus, method and computer program product for measuring time-of-flight of a pulsed radiation beam which is emitted by a radiation source, reflected by an object, and received by a detector, wherein the radiation pulse is switched on and off dependent on the distance of the object and wherein the the frequency of the radiation pulses is measured.

---

**ANNEX TO THE EUROPEAN SEARCH REPORT
ON EUROPEAN PATENT APPLICATION NO.**

EP 08 01 4640

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2009

| Patent document cited in search report | | Publication date | Patent family member(s) | | Publication date |
|---|---|---|---|---|---|
| US 6166809 | A | 26-12-2000 | NONE | | |
| DE 4414514 | A1 | 02-11-1995 | NONE | | |
| US 5898484 | A | 27-04-1999 | CA 2207706 | A1 | 30-11-1998 |
| US 6785973 | B1 | 07-09-2004 | AT 328264 | T | 15-06-2006 |
| | | | AU 779807 | B2 | 10-02-2005 |
| | | | AU 1739901 | A | 14-05-2001 |
| | | | CA 2390159 | A1 | 10-05-2001 |
| | | | CN 1402828 | A | 12-03-2003 |
| | | | DE 60028404 | T2 | 16-11-2006 |
| | | | EP 1226401 | A1 | 31-07-2002 |
| | | | ES 2261262 | T3 | 16-11-2006 |
| | | | HK 1053165 | A1 | 29-07-2005 |
| | | | JP 2003513259 | T | 08-04-2003 |
| | | | WO 0133161 | A1 | 10-05-2001 |
| | | | NL 1013479 | C1 | 09-05-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6785973 B
- US 5898484 A
- US 5305091 A
- US 5764360 A
- US 2006006836 A
- JP 8050266 B
- US 6091745 A

**Non-patent literature cited in the description**

- Using polarization for Optoelectronic Integrated Devices. *Symposium on Contemp. Photon Technol,* January 2007, 57-60, www.spt-archlves.com/paper/cpt2007F-2